# FASCICULE DE BREVET EUROPEEN

(11) **EP 1 855 375 B1**
(45) Date de publication et mention de la délivrance du brevet: **09.09.2009**
(21) Numéro de dépôt: 07354025.4
(22) Date de dépôt: 27.04.2007
(51) Int. Cl.: H02M 7/487, H02M 1/44

(54) **Dispositif et procédé de commande d'un convertisseur et convertisseur électrique comportant un tel dispositif**
Vorrichtung und Verfahren zur Steuerung eines Wandlers und Stromwandler, der mit einer solchen Vorrichtung versehen ist
Device and method of controlling a converter and electric converter comprising such a device

(30) Priorité: 09.05.2006 FR 0604090
(43) Date de publication de la demande: 14.11.2007
(73) Titulaire: Schneider Electric Industries SAS, 92500 Rueil-Malmaison (FR)
(72) Inventeur: Baudesson, Philippe, Schneider Electric, 38050 Grenoble Cedex 09 (FR); Videt, Arnaud, Schneider Electric, 38050 Grenoble Cedex 09 (FR); Le Moigne, Philippe, Schneider Electric, 38050 Grenoble Cedex 09 (FR); Idir, Nadir, Schneider Electric, 38050 Grenoble Cedex 09 (FR)
(74) Mandataire: Tripodi, Paul

(56) Documents cités:
- US-B1- 6 842 354
- TALLAM R M ET AL: "A carrier-based PWM scheme for neutral-point voltage balancing in three-level inverters" APPLIED POWER ELECTRONICS CONFERENCE AND EXPOSITION, 2004. APEC '04. NINETEENTH ANNUAL IEEE ANAHEIM, CA, USA 22-26 FEB. 2004, PISCATAWAY, NJ, USA,IEEE, 22 février 2004 (2004-02-22), pages 1675-1681, XP010704792 ISBN: 0-7803-8269-2
- BENDRE A ET AL: "Comparative evaluation of modulation algorithms for neutral point clamped converters" INDUSTRY APPLICATIONS CONFERENCE, 2004. 39TH IAS ANNUAL MEETING. CONFERENCE RECORD OF THE 2004 IEEE SEATTLE, WA, USA 3-7 OCT. 2004, PISCATAWAY, NJ, USA,IEEE, 3 octobre 2004 (2004-10-03), pages 798-805, XP010734614 ISBN: 0-7803-8486-5
- RATNAYAKE K R M N ET AL: "A novel PWM scheme to eliminate common-mode voltage in three-level voltage source inverter" POWER ELECTRONICS SPECIALISTS CONFERENCE, 1998. PESC 98 RECORD. 29TH ANNUAL IEEE FUKUOKA, JAPAN 17-22 MAY 1998, NEW YORK, NY, USA,IEEE, US, vol. 1, 17 mai 1998 (1998-05-17), pages 269-274, XP010294874 ISBN: 0-7803-4489-8
- HAORAN ZHANG ET AL: "Multilevel Inverter Modulation Schemes to Eliminate Common-Mode Voltages" IEEE TRANSACTIONS ON INDUSTRY APPLICATIONS, IEEE SERVICE CENTER, PISCATAWAY, NJ, US, vol. 36, no. 6, novembre 2000 (2000-11), XP011022884 ISSN: 0093-9994

## Description

### DOMAINE TECHNIQUE

L'invention concerne un dispositif de commande d'un convertisseur d'énergie électrique comportant des moyens de contrôle de la conduction de bras de semi-conducteurs de puissance,
ledit convertisseur d'énergie électrique comportant :
- une alimentation continue comportant une première ligne de tension positive, une seconde ligne de tension négative, et une troisième ligne de tension intermédiaire, et
- des moyens de conversion ayant au moins trois bras de semi-conducteurs de puissance connectés entre lesdites lignes de tension positive, négative ou intermédiaire et des sorties pour fournir au moins une tension de sortie,
lesdits moyens de contrôle comportant des moyens de traitement pour fournir des signaux de modulation de signaux de commande desdits bras.

L'invention concerne aussi un convertisseur électrique comportant un tel dispositif de contrôle.

L'invention concerne aussi un procédé de commande d'un tel convertisseur.

### ETAT DE LA TECHNIQUE

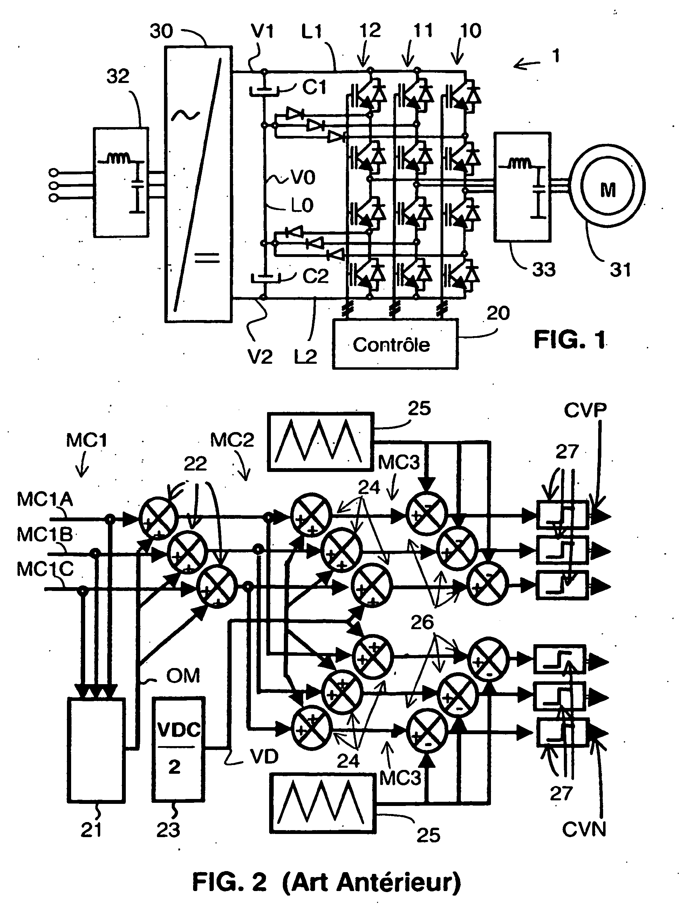

Les dispositifs de commande de convertisseurs connus, par exemple du document US 6 842 354, commandent des bras de commutation à semi-conducteurs de puissance pour fournir des tensions de sortie alimentant une charge. Lorsque les convertisseurs sont du type à trois niveaux comme celui représenté sur la figure 1, des bras du convertisseur sont connectés entre une ligne L1 de tension positive V1, une ligne L2 de tension négative V2 et une ligne L0 de tension intermédiaire V0. La ligne de tension intermédiaire L0 est connectée à un point commun de deux condensateurs C1 et C2 de filtrage de tension continue connectés en série entre la ligne L1 et la ligne L2. Sur le schéma de la figure 1, un premier bras 10 comporte quatre semi-conducteurs connectés respectivement entre la ligne L1 de tension positive V1 et un premier point commun recevant la tension intermédiaire V0 à travers une première diode, entre le premier point commun et une première sortie S10, entre la première sortie et un second point commun recevant la tension intermédiaire V0 à travers une seconde diode connectée en sens inverse de la première diode, entre le second point commun et la ligne L2 de tension négative V2. Deux autres bras 11 et 12 comportent chacun quatre semi-conducteurs de puissance et deux diodes connectées de la même manière pour fournir des tensions ou des courants électriques de charges ou de réseau électrique sur des sorties respectivement S11 et S 12. Un circuit de contrôle 20 commande la conduction ou le blocage des semi-conducteurs des bras.

Généralement les convertisseurs comportent aussi des redresseurs 30 altematif-continu recevant une tension alternative depuis un réseau électrique et fournissant une tension ou un courant continu sur les lignes L1 et L2.

En particulier, lorsque les convertisseurs sont utilisés dans des variateurs de vitesse pour alimenter un moteur électrique 31, les brusques variations de tension provoquées par la mise en conduction et le blocage des semi-conducteurs de puissance provoque des courants de mode commun circulant sur les lignes d'alimentation du moteur ou plus généralement de la charge. De tels courants de mode commun, se bouclent souvent par la masse de l'installation électrique entre l'entrée et la sortie du convertisseur. De manière connue, ce type de courant génère des perturbations électromagnétiques qu'il faut atténuer par des filtres électromagnétiques 32 et 33 disposés en amont et/ou en aval du convertisseur.

La figure 2 montre un exemple de schéma bloc d'une partie d'une unité de traitement 7 d'un circuit de contrôle 20 pour fournir des signaux de commande des bras. Dans ce circuit, des signaux de modulation sont utilisés pour une modulation de type intersective sur un signal triangulaire de porteuse haute fréquence permettant une modulation en largeur d'impulsion. Ainsi, chaque commande de phase ou de bras du convertisseur est modulée par un signal de modulation. Lorsque le convertisseur est à trois niveaux avec tension intermédiaire, les voies de modulation peuvent être doublées.

Sur le schéma de la figure 2, un module 21 détermine une composante générale de commande OM à appliquer à des signaux de modulation de commande MC1 issus d'une unité de régulation du convertisseur. De préférence, la composante générale de commande OM comporte des signaux de surmodulation pour bloquer successivement un bras du convertisseur. Des premiers opérateurs 22 modifient des premiers signaux MC1 de modulation triphasés en leur appliquant ladite composante générale de commande OM. Des signaux MC2 ainsi transformés comportent aussi la composante générale de commande OM. Un module 23 fournit une tension de référence VD qui est appliquée aux signaux MC2 par des opérateurs 24 pour fournir des signaux de modulation MC3. Un ou deux modules 25 fournissent un signal haute fréquence destiné à être modulé par des signaux de modulation MC3 représentation des signaux de modulation initiaux modifiés par les opérateurs 22 et 24. Des opérateurs 26 combinent les signaux de modulation MC2 avec des signaux haute fréquence F1 triangulaire pour fournir des signaux de commande CVP et CVN des bras 10, 11, 12. Les signaux de commande sont au format de modulation de largeur d'impulsion et fonctionnent sur trois niveaux de tension. Les commandes des bras étant de préférence binaires en saturé-bloqué, des circuits de conditionnement 27 mettent en forme les signaux de commande. Le signal VD de référence est généralement représentatif d'une tension continue, par exemple de la moitié de la tension continue des lignes L1 et L2 ou de la tension intermédiaire.

Des variations de tensions sur trois niveaux de tension avec une régulation selon un espace vectoriel à trois dimensions fonctionnant par de nombreuses variations de tension par cycle de régulation provoquent en sortie du convertisseur des tensions et des courants de mode commun très importants. L'utilisation de filtres de mode commun conduit à des coûts de fabrication élevés, à des dimensions de produit encombrantes ainsi qu'à des pertes de puissance et de rendement des convertisseurs.

### EXPOSE DE L'INVENTION

L'invention a pour but un dispositif et un procédé de commande d'un convertisseur permettant une réduction des perturbations de mode commun, ainsi qu'un convertisseur comportant un tel dispositif.

Dans un dispositif selon l'invention, les moyens de contrôle comportent :
- des premiers moyens de détermination de blocages possibles d'un bras, et
- des premiers moyens de sélection de blocages pour sélectionner des blocages permettant une double commutation parmi des blocages possibles, la sélection de blocages permettant de bloquer un bras dudit convertisseur en fonction des blocages permettant une double commutation dans des autres bras.

De préférence, lesdits moyens de contrôle comportent des seconds moyens de sélection de blocages adaptés à un équilibrage de tension intermédiaire, la sélection de blocages permettant de bloquer un bras dudit convertisseur aussi en fonction de l'équilibrage de tension intermédiaire.

Dans un mode de réalisation préférentiel, lesdits moyens de contrôle comportent :
- des moyens de fourniture de signaux de porteuse pour fournir aux moins deux signaux de porteuse à pentes inversées, et
- des moyens de modulation de signaux de porteuses recevant lesdits signaux de porteuse à pente inversée et des signaux de modulation comportant une surmodulation de blocage d'un bras ou d'une sortie de puissance.

De préférence, lesdits moyens de contrôle comportent des moyens de sélection de signaux de porteuses à appliquer à la commande de bras du convertisseur.

De préférence, lesdits moyens de sélection de signaux de porteuses sélectionnent les porteuses en fonction d'un sens de rotation dans un triangle élargi pointé par un vecteur dans un espace vectoriel de contrôle.

Avantageusement, lesdits moyens de sélection de signaux de porteuses sélectionnent les porteuses en fonction d'une commutation prioritaire de même type transistor-diode ou diode-transistor dans deux bras qui commutent simultanément.

Avantageusement, lesdits moyens de sélection de signaux de porteuses sélectionnent les porteuses en fonction d'une commutation prioritaire dans le sens diode transistor dans deux bras qui commutent simultanément.

De préférence, les signaux de porteuse sont des signaux de forme en dent de scie comportant une première portion à variation très rapide ou à échelon et une seconde portion ayant une pente formant une rampe, le sens de double commutation complémentaire étant déterminé sur les portions à variation rapide.

Avantageusement, pendant un cycle de régulation correspondant à un vecteur défini dans un espace vectoriel, la variation de sortie a au plus deux niveaux de tension.

Avantageusement, pendant un cycle de régulation correspondant à un vecteur défini dans un espace vectoriel, la variation de sortie a au plus deux variations de niveau de tension.

Un convertisseur électrique comportant :
- un dispositif de commande comportant des moyens de contrôle de la conduction de bras de semi-conducteurs de puissance,
- une alimentation continue comportant une première ligne de tension positive, une seconde ligne de tension négative, et une troisième ligne de tension intermédiaire, et
- des moyens de conversion ayant au moins trois bras de semi-conducteurs de puissance connectés entre lesdites lignes de tension positive, négative ou intermédiaire et des sorties pour fournir au moins une tension de sortie,
lesdits moyens de contrôle comportant des moyens de traitement pour fournir des signaux de modulation de signaux de commande desdits bras,
comporte au moins un dispositif de commande tel que défini ci-dessus et des moyens de mesure des courants disposés sur des lignes de conducteurs de sorties et connectés audit dispositif de commande pour fournir des signaux représentatifs de courants à des moyens de détermination de blocages pour bloquer une sortie de puissance ou d'un bras.

Un procédé de commande d'un convertisseur d'énergie électrique selon l'invention comportant :
- un dispositif de commande comportant des moyens de contrôle de la conduction de bras de semi-conducteurs de puissance,
- une alimentation continue comportant une première ligne de tension positive, une seconde ligne de tension négative, et une troisième ligne de tension intermédiaire, et
- des moyens de conversion ayant au moins trois bras de semi-conducteurs de puissance connectés entre lesdites lignes de tension positive, négative ou intermédiaire et des sorties pour fournir au moins une tension de sortie,
comporte :
- une première détermination de blocages permettant une double commutation parmi des blocages possibles, et
- une première sélection de blocages pour bloquer un bras dudit convertisseur en fonction des blocages permettant une double commutation.

Avantageusement, le procédé comporte une seconde sélection de blocages adaptés à un équilibrage de tension intermédiaire, ladite sélection de blocages sélectionnant le bras à bloquer aussi en fonction de l'équilibrage de tension intermédiaire.

De préférence, le procédé comporte :
- la fourniture de signaux de porteuse pour fournir au moins deux signaux de porteuse à pentes inversées, et
- la modulation desdits signaux de porteuses à pente inversée par des signaux de modulation comportant une surmodulation de blocage d'un bras ou d'une sortie de puissance.

Dans un mode de réalisation préférentiel, le procédé comporte la sélection de signaux de porteuses à appliquer à la commande de bras du convertisseur.

De préférence, le procédé comporte la sélection de signaux de porteuses pour sélectionner des porteuses en fonction d'un sens de rotation dans un triangle élargi pointé par un vecteur d'un espace vectoriel de contrôle.

Avantageusement, le procédé comporte la sélection de signaux de porteuses pour sélectionner des porteuses en fonction d'une commutation prioritaire de même type transistor-diode ou diode-transistor dans deux bras qui commutent simultanément.

De préférence, le procédé comporte la fourniture de signaux de porteuse de forme en dent de scie comportant une première portion à variation très rapide ou à échelon et une seconde portion ayant une pente formant une rampe, le sens de double commutation complémentaire étant déterminé sur les portions à variation rapide.

Avantageusement, le procédé comporte, pendant un cycle de régulation correspondant à un vecteur défini dans un espace vectoriel, une commande de bras de commutation provoquant une variation de sortie ayant au plus deux niveaux de tension ou au plus deux variations de niveau de tension.

### BREVE DESCRIPTION DES DESSINS

D'autres avantages et caractéristiques ressortiront plus clairement de la description qui va suivre, de modes particuliers de réalisation de l'invention, donnés à titre d'exemples non limitatifs, et représentés aux dessins annexés sur lesquels :
- la figure 1 représente un schéma d'un convertisseur dans lequel l'invention peut être appliquée ;
- la figure 2 représente un schéma bloc d'un circuit de commande d'un convertisseur de type connu ;
- la figure 3 représente un diagramme d'un espace vectoriel déterminant la commande des bras d'un convertisseur à trois bras ;
- la figure 4 représente un détail d'un triangle de régulation d'un diagramme d'un espace vectoriel de la figure 3 ;
- les figures 5 et 6 représentent des schémas d'un dispositif de commande selon un mode de réalisation de l'invention ;
- la figure 7 représente un convertisseur selon l'invention avec un dispositif de commande selon les figures 5 et 6 pour commander des bras de semi-conducteurs de puissance ;
- les figures 8A à 8C montrent des signaux de tension dans des bras de semi-conducteurs de puissance ;
- les figures 9 et 10 des signaux de porteuses à de pentes inversées ;
- la figure 11 représente des signaux de porteuses applicables à un dispositif de commande selon l'invention pour commander un convertisseur à trois niveaux de tension ;
- la figure 12 représente une régulation dans un triangle élargi pour être utilisée dans un dispositif de commande selon un mode de réalisation de l'invention ;
- la figure 13 représente un procédé de commande selon un mode de réalisation de l'invention.

### DESCRIPTION DETAILLEE DE MODES DE REALISATION PREFERES

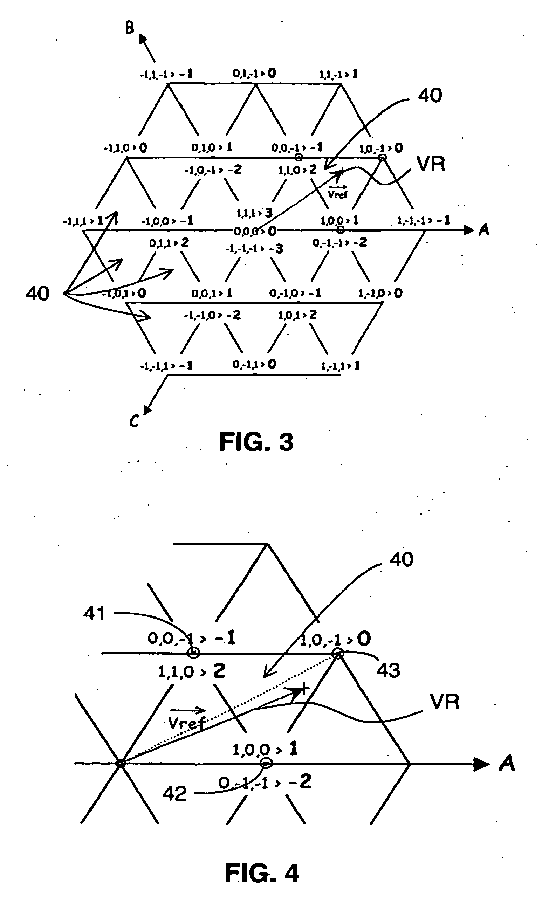

Dans un dispositif de commande d'un convertisseur d'énergie électrique les bras du convertisseur sont commandés selon un mode de régulation défini dans un espace vectoriel. La figure 3 représente un diagramme d'un espace vectoriel pouvant déterminer la commande des bras d'un convertisseur à trois bras référencés sur des axes A, B et C. Dans ce cas, un vecteur de référence VR image des tensions de commande à appliquer aux trois bras pointe dans un triangle 40 de l'espace vectoriel. Un détail d'un triangle 40 de régulation d'un diagramme d'un espace vectoriel est représenté sur la figure 4. Des sommets 41 42 et 43 du triangle 40 correspondent à des états des semi-conducteurs de puissance ou à des états de tension des sorties du convertisseur durant un cycle de régulation. La notation des sommets correspond aux états individuels de chaque sortie et à un état global desdites sorties correspondant à la tension de mode commun en unité réduite générée par le convertisseur. Ainsi, durant un cycle de régulation équivalent à une période de découpage, les sorties des bras du convertisseur prennent successivement des valeurs définies correspondant à une tension de mode commun de sortie définie dans les sommets d'un triangle de l'espace vectoriel entourant le vecteur.

Avec un dispositif de l'état de la technique le nombre de variations de tension par cycle et l'écart ou l'amplitude de tension par cycle peut être très élevée entraînant des tensions et des courants de mode commun important. Par exemple, dans le triangle 40 représenté sur la figure 4, l'état global des sorties correspondant à la tension de mode commun en unité réduite peut prendre les valeurs -2, -1, 0, 1, 2 et générer un nombre variations important ainsi qu'une forte amplitude.

Dans un dispositif de commande selon un mode de réalisation de l'invention, le nombre de variations et/ou l'amplitude' des sorties est réduit pour réduire les perturbations de mode commun.

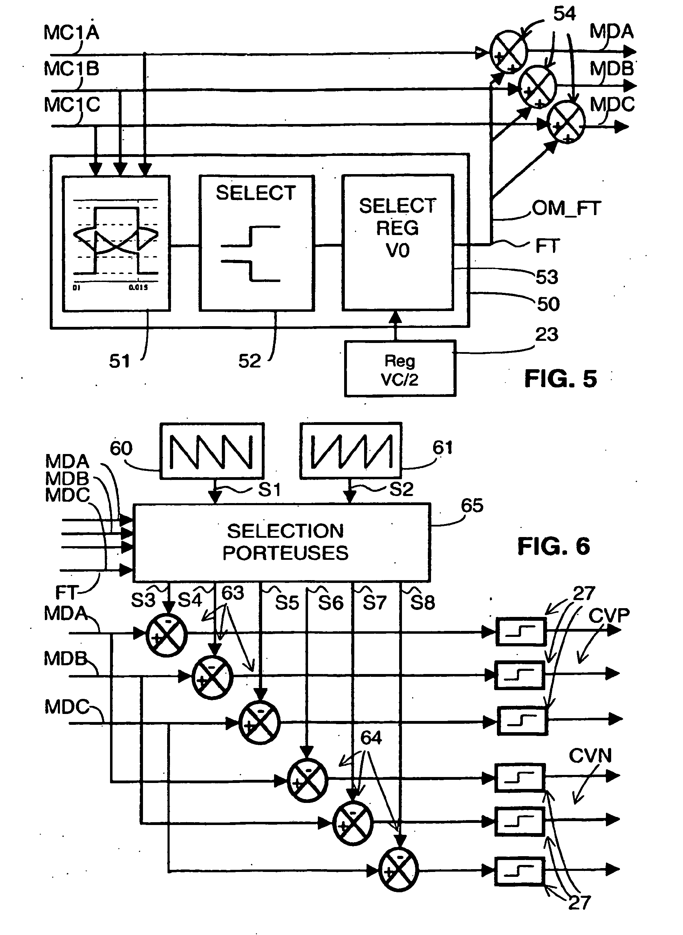

Les figures 5 et 6 représentent des schémas partiels d'un dispositif de commande selon un mode de réalisation de l'invention. Sur la figure 5, un module 50 de traitement des signaux de régulation comporte un premier module 51 de détermination de blocages possibles pour un vecteur de référence VR1 image dans l'espace vectoriel des trois signaux de commande MC1A, MC1B, MC1C issu du module de régulation du convertisseur. Le blocage est fait de préférence par des signaux de surmodulation à appliquer à la modulation des trois bras, cependant d'autres moyens de blocage sont possibles. Les blocages permettent de bloquer un bras de semi-conducteurs pour avoir une tension positive négative ou intermédiaire. Un premier module 52 de sélection de blocages sélectionne des blocages permettant une double commutation parmi des blocages possibles. La sélection de blocages permet de bloquer un bras dudit convertisseur en fonction des blocages permettant une double commutation dans des autres bras. Ainsi, lorsqu'un bras est bloqué et les deux autres bras sont en commutation, leur sens de commutation est complémentaire ainsi que les variations de tension correspondantes. La complémentarité choisie des variations de tension réduit fortement des tensions et les courants de mode commun.

Avantageusement, lorsqu'il y a au moins deux possibilités de blocages permettant une double commutation, un second module 53 de sélection de blocages sélectionne un ou des s blocages adaptés à un équilibrage de tension intermédiaire. La sélection de blocages permet de bloquer un bras dudit convertisseur aussi en fonction de l'équilibrage de tension intermédiaire. Par exemple, des signaux de surmodulation FT portant des informations de blocage, peuvent être appliquer directement aux signaux de modulation ou à travers une composante générale de commande OM. Sur la figure 5, une composante générale de commande OM_FT comporte aussi les signaux de surmodulation avec blocages appliqués aux signaux de modulation avec des opérateurs 54. La surmodulation est de préférence de type "flat top" c'est à dire par un blocage plat d'un signal de modulation commandant le bras à bloquer. En sortie des opérateurs 54, des signaux MDA, MDB et MDC de modulation comportent des signaux de surmodulation sélectionnés pour réduire des tensions de mode commun.

Sur la figure 6, le dispositif de commande comporte des modules 60 et 61 de fourniture de signaux de porteuse pour fournir aux moins deux signaux de porteuse S1 et S2 à pentes inversées.

Les signaux S1 et S2 peuvent être appliqués directement à des opérateurs 63 et 64 de modulation de signaux de porteuses pour être modulés par les signaux de modulation MDA, MDB et MDC comportant les signaux de surmodulation de blocage d'un bras ou d'une sortie de puissance.

De préférence, le dispositif de commande comporte un module 65 de sélection de signaux de porteuses à appliquer à la commande de bras du convertisseur. Ce module reçoit des premiers signaux de porteuses S1 et S2 à pentes inversées et distribue des signaux S3 à S8 correspondant à des signaux de porteuses à pentes inversées et reconditionnées en fonction du sens de la pente des signaux, et des tensions positives ou négatives des bras de commutation. La sélection des signaux de porteuse permet aussi de gérer les temps morts de commutation en fonction du sens transistor-diode ou diode-transistor. En ayant des sens de commutation de types identiques, la réduction des variations de tension et par conséquent les perturbations de mode commun sont encore plus efficace.

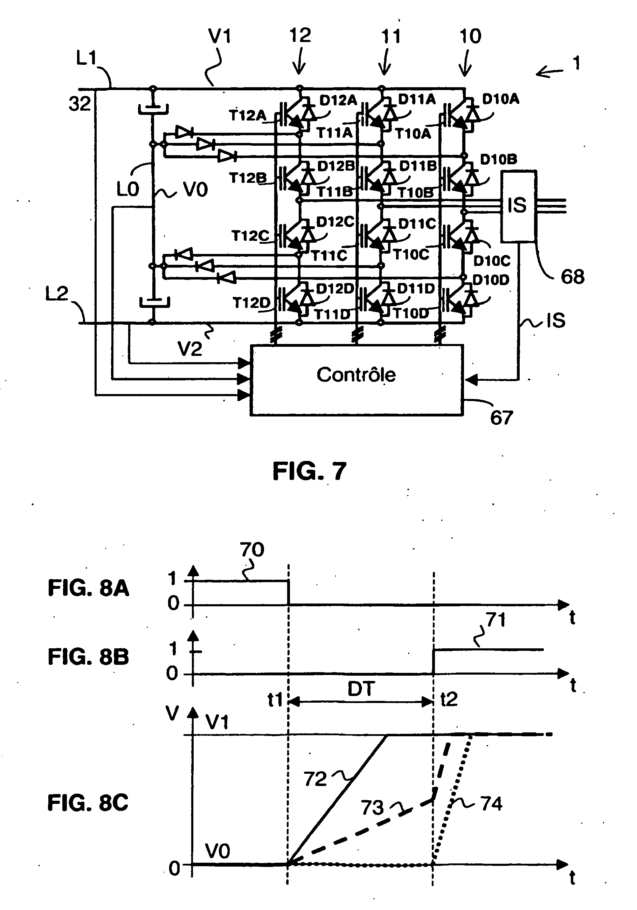

La figure 7 représente un convertisseur selon l'invention avec un dispositif de commande selon les figures 5 et 6 pour commander des bras de semi-conducteurs de puissance. Le convertisseur électrique comporte :
- une alimentation continue comportant une première ligne L1 de tension positive V1, une seconde ligne L2 de tension négative V2, et une troisième ligne L0 de tension intermédiaire V0,
- un convertisseur ayant au moins trois bras 10, 11, 12 de semi-conducteurs de puissance connectés entre lesdites lignes de tension positive, négative ou intermédiaire et des sorties pour fournir au moins une tension de sortie, et
- un dispositif de commande comportant un circuit de contrôle de la conduction de bras 10, 11, 12 de semi-conducteurs de puissance.

Chaque bras de semi-conducteur de puissance comporte quatre transistors T10A à T10D, T11A à T11D et T12A à T12D couplés avec des diodes respectivement D10A à D10D, D11A à D11D et D12A à D12D. Les tensions et les courants de sortie dépendent des états de blocage ou de conduction des transistors ou des diodes des bras. Ainsi, le blocage des sorties par la surmodulation et les sens de commutation des autres bras sont aussi déterminés en fonction de signaux de modulation issus d'une unité de régulation du convertisseur et des courants de sortie.

Un circuit de contrôle 67 comporte une unité de traitement pour fournir des signaux de modulation de signaux de commande desdits bras, et des modules de détermination de signaux de surmodulation.. Les signaux de modulation de commande MC1 issus de l'unité de régulation du convertisseur sont utilisés pour déterminer la surmodulation bloquant une sortie de puissance d'un bras. Un circuit 68 de mesure de courants disposé sur des lignes de conducteurs de sorties est connecté audit dispositif de commande pour fournir des signaux représentatifs de courant. Ces signaux IS sont utilisés pour définir les signaux de porteuses à rampes inversées à appliquer aux bras de semi-conducteurs.

Les figures 8A à 8C montrent des signaux de tension dans des bras de semi-conducteurs de puissance. Sur la figure 8A, une courbe 70 illustre une commutation de blocage d'interrupteur ou de transistor connectés entre la ligne positive et une sortie, par exemple T10A ou T10B. Sur la figure 8B une courbe 71 illustre une commutation d'amorçage d'interrupteur ou de transistors connectés entre la ligne négative et une sortie, par exemple T10C ou T10D. Entre des instants t1 et t2 correspondant aux deux commutations, il y a un temps mort DT. Sur la figure 8C des courbes 72 et 74 montrent des instants différents de variation de la tension sur la sortie d'un bras. La variation de la tension de sortie peut se produire au blocage de l'interrupteur T10A ou T10B, c'est la courbe 72 ou 73, ou bien à l'amorçage de l'interrupteur T10C ou T10D, c'est la courbe 74. A cet instant la variation dépend de la nature de l'interrupteur T10A ou T10B initialement passant diode ou transistor et du signe du courant qui le traverse.

Sur la figure 8C des courbes 72 et 73 montrent des variations différentes de tension sur la sortie lors d'une commutation dans le sens transistor-diode. Ces variations sont dépendantes de la valeur du courant de sortie. Une courbe 74 montre une variation de tension sur la sortie lors d'une commutation dans le sens diode-transistor après l'instant t2. Cette variation dépend du contrôle de la commutation du transistor.

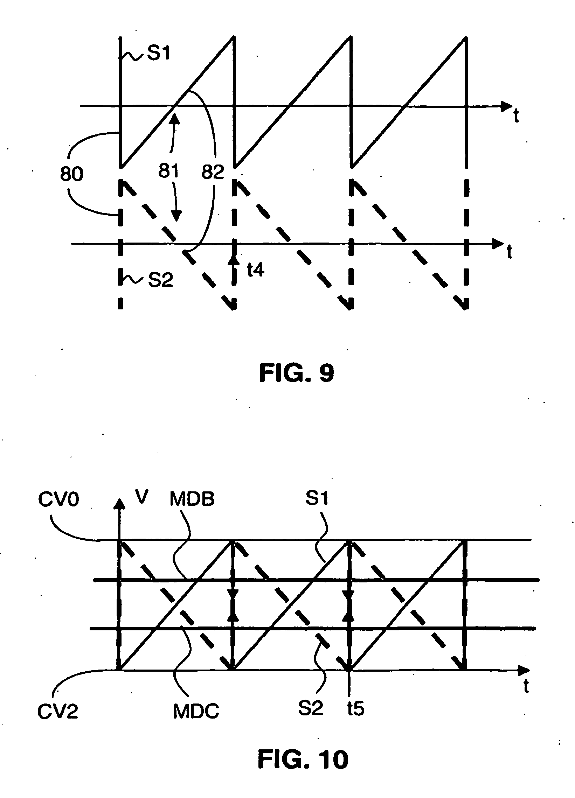

La figure 9 représente des exemples de signaux S1 et S2 de porteuses à pentes inversées. Sur cette figure, les signaux de porteuse sont des signaux de forme en dent de scie comportant une première portion 80 à variation très rapide ou à échelon et une seconde portion 81 ayant une pente 82 formant une rampe, le sens de double commutation complémentaire étant déterminé de préférence sur les portions à variation rapide. Par exemple, a l'instant t4 le signal S 1 passe rapidement d'une valeur haute à une valeur basse alors que le signal S2 passe d'une valeur basse à une valeur haute.

Avantageusement, pour une meilleure atténuation des variations de tension de mode commun, le module 65 de sélection de signaux de porteuses sélectionne les porteuses en fonction d'une commutation prioritaire de même type transistor-diode ou diode-transistor dans deux bras qui commutent simultanément de façon à ne pas avoir de décalage temporel dû aux temps morts. De préférence, lorsque le choix est possible, le module 65 de sélection sélectionne les porteuses en fonction d'une commutation prioritaire dans le sens diode-transistor dans deux bras qui commutent simultanément.

Pour être utilisés avec les signaux de modulation de bras du convertisseur, les signaux de porteuse sont de préférence normés ou calibrés en fonction de l'amplitude des tensions de sortie et des tensions d'alimentation continue V1, V0, V2, à des valeurs respectivement CV1, CV0, CV2. Ainsi sur la figure 10, à un instant t5 le signal S1 passe rapidement d'une valeur CV0 à une valeur CV2 et le signal S2 passe rapidement d'une valeur CV2 à une valeur CV0. Sur la figure 10 des signaux de modulation MDB et MDC croisent les signaux de porteuse pour commander des bras du convertisseur. Sur cette figure, le signal de modulation MDA n'est pas représenté puisque dans ce cas il bloque un bras et ne participe pas à la commutation.

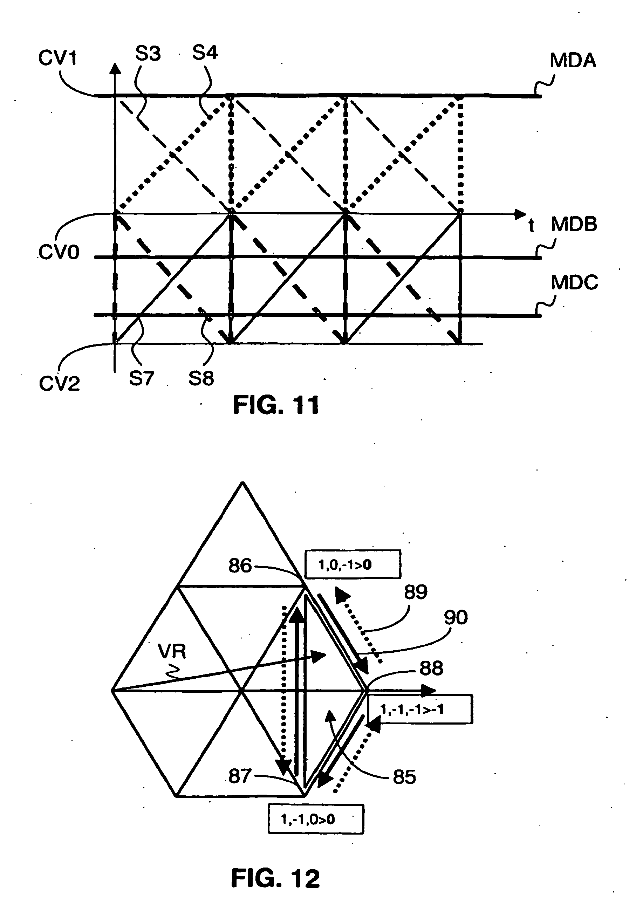

La figure 11 représente des signaux de porteuses applicables à un dispositif de commande selon l'invention pour commander un convertisseur à trois niveaux de tension. Sur cette figure, deux courbes de signaux de porteuses en dents de scie S3 et S4 sont calibrées pour des commandes de semi-conducteurs de puissance opérant en tension globalement positives CV0 et CV1, et deux courbes de signaux de porteuses en dents de scie S7 et S8 sont calibrées pour des commandes de semi-conducteurs de puissance opérant en tension globalement négatives CV2 et CV0. Le signal de modulation MDA est bloqué par la surmodulation à la valeur CV1, et les signaux de porteuse ne croisent pas de signal de modulation. Sur la partie négative, les signaux de modulation MDB et MDC croisent les signaux de porteuse respectivement S7 et S8. Au moment des variations rapides des signaux de porteuses, les commutations en sortie du convertisseur sont faites de manière complémentaire pour limiter fortement les perturbations, en particulier les perturbations de mode commun.

Pour augmenter les possibilités de choix de modulation et avoir des degrés de liberté de contrôle supplémentaire, dans un dispositif de traitement des modulantes de commande selon un mode de réalisation de l'invention, la modulation peut être faite de préférence sur un triangle de modulation élargie. Sur la figure 12 le module de sélection de signaux de porteuses sélectionne les porteuses en fonction d'un sens de rotation dans un triangle élargi 85 pointé par un vecteur VR dans un espace vectoriel de contrôle. Ce triangle élargi a un premier sommet 86 dans un premier triangle initial, un second sommet 87 dans un second triangle initial contigu au premier triangle, et un troisième sommet 88 commun au premier triangle et au second triangle. Sur ce nouveau triangle élargi les sens de rotation illustrent les choix des signaux de porteuse utilisés.

Les caractéristiques de sélection des signaux de blocage et des porteuses à pentes inversées permettent d'obtenir, pendant un cycle de régulation correspondant à un vecteur défini dans un espace vectoriel, une variation de sortie avec au plus deux niveaux de tension et/ou une variation de sortie avec au plus deux variations de niveau de tension.

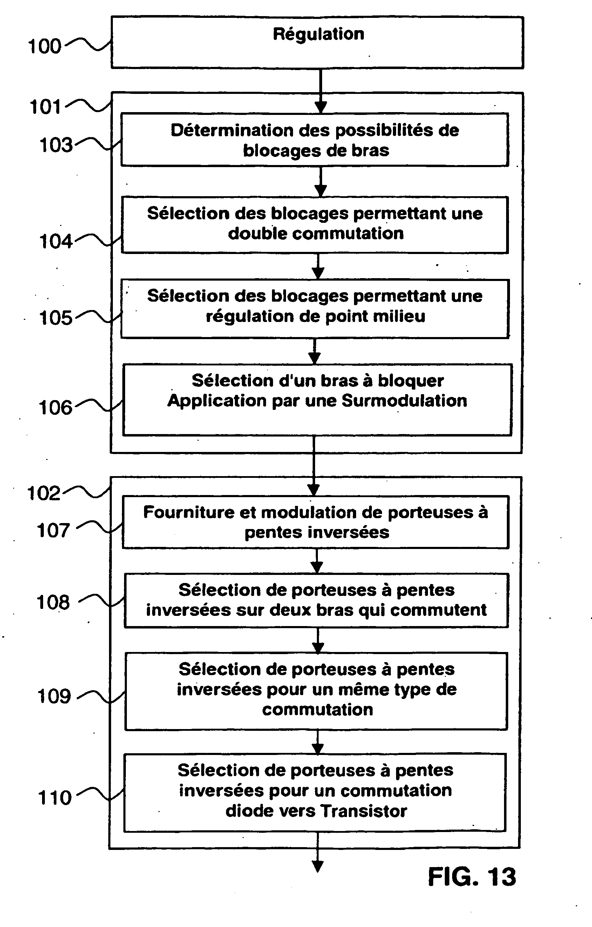

La figure 13 représente un organigramme d'un procédé de commande selon un mode de réalisation de l'invention. Pendant un cycle 100 de régulation, référencé par au début de l'organigramme, deux phases permettent de déterminer le type de blocage et les ordres de commande des semi-conducteurs de puissance. Une première phase 101 permet de déterminer un bras à bloquer et la position blocage dudit bras dans une configuration de convertisseur à trois niveaux de tension. Le blocage est de préférence appliqué à des signaux de modulation à travers un signal de surmodulation. Le signal de surmodulation est porté avantageusement par une composante générale de commande portant aussi d'autres signaux de régulation. Une seconde phase 102 de régulation permet de sélectionner des signaux de porteuse utilisés pour obtenir les ordres de commande tout en optimisant les caractéristiques de commutation des semi-conducteurs de puissance des bras du convertisseur qui commutent.

Dans le mode de réalisation de la figure 13, une étape 103 détermine les blocages possibles permettant de bloquer un bras du convertisseur, et une étape 104 opère une première sélection des blocages permettant une double commutation parmi des blocages possibles. De préférence, ces deux étapes 103 et 104 peuvent être regrouper en une seule étape permettant de déterminer et de sélectionner directement des blocages permettant une double commutation parmi des blocages possibles. Ainsi, la sélection d'une surmodulation permet de bloquer un bras dudit convertisseur en fonction des surmodulations permettant une double commutation.

Une étape 105 opère aussi une seconde sélection de blocages adaptés à un équilibrage de tension intermédiaire afin d'en assurer la régulation. Ainsi, ladite sélection sélectionne le bras à bloquer en fonction de l'équilibrage de tension intermédiaire déterminée par l'étape 105. A une étape 106, la sélection du bras à bloquer est associée à un signal de surmodulation.

L'organigramme de la figure 13 comporte une étape 107 pour la fourniture de signaux de porteuse pour fournir au moins deux signaux de porteuse à pentes inversées, et la modulation desdits signaux de porteuses à pente inversée par des signaux de modulation.

Une étape 108 sélectionne des signaux de porteuses à pentes inversées à appliquer à la commande de bras du convertisseur. Dans un cycle particulier, la sélection de signaux de porteuses permet de sélectionner des porteuses en fonction d'un sens de rotation dans un triangle élargi pointé par un vecteur VR d'un espace vectoriel de contrôle.

De préférence, une épate 109 de sélection de signaux de porteuses sélectionne des porteuses en fonction d'une commutation prioritaire de même type transistor-diode ou diode-transistor dans deux bras qui commutent simultanément. Avantageusement, une étape 110 sélectionne le sens de type diode-transistor lorsque cela est possible.

Dans ce mode de réalisation préférentiel, le procédé comporte la fourniture de signaux de porteuse de forme en dent de scie comportant une première portion à variation très rapide ou à échelon et une seconde portion ayant une pente formant une rampe, le sens de double commutation complémentaire étant déterminé sur les portions à variation rapide. Ainsi, pendant un cycle de régulation correspondant à un vecteur défini dans un espace vectoriel, une commande de bras de commutation provoque une variation de sortie ayant au plus deux niveaux de tension ou au plus deux variations de niveau de tension.

Des dispositifs de conversion selon des modes de réalisation sont de préférence des variateurs de vitesse, mais ils peuvent être aussi notamment des onduleurs, des alimentations sans interruption, des convertisseurs d'énergie unidirectionnels ou bidirectionnels, ou des convertisseurs de fréquence.

L'invention s'applique en particulier aux convertisseurs triphasés à trois niveaux de tension continue à trois bras ou à quatre bras, mais d'autres convertisseurs ayant un nombre différent de bras et/ou de phases peuvent être concernés.

Les fonctions des moyens de contrôle peuvent être réalisées par des circuits électroniques analogiques, numériques, et/ou sous une forme programmée pour être mises en oeuvre dans des microcontrôleurs ou des microprocesseurs.

Les semi-conducteurs de puissance de ces convertisseurs sont avantageusement des transistors à grille isolée dits IGBT mais d'autres types de semi-conducteurs peuvent être utilisés. Les bras peuvent comporter plusieurs semi-conducteurs connectés en série et/ou en parallèle en fonction des tensions, des courants ou des puissances électriques utilisées. Par exemple, les tensions d'entrée ou de sortie peuvent être de quelques dizaines de volts à mille volts pour des applications en réseaux basse tension ou avoir des tensions de plusieurs milliers de volts notamment en application moyenne tension. Les courants d'entrée ou de sortie peuvent être de quelques ampères à plus de mille ampères.

## Revendications

1. Dispositif de commande d'un convertisseur d'énergie électrique qui comporte une alimentation continue comportant une première ligne (L1) de tension positive (V1), une seconde ligne (L2) de tension négative (V2) et une troisième ligne (L0) de tension intermédiaire (V0), ainsi que des moyens (1) de conversion ayant au moins trois bras (10, 12, 13) de semi-conducteurs de puissance connectés entre lesdites lignes (L1, L2, L0) de tension positive, négative ou intermédiaire et des sorties pour fournir au moins une tension de sortie,
ledit dispositif de commande comportant des moyens de contrôle (67) de la conduction des bras (10, 12, 13) de semi-conducteurs de puissance, dans lequel lesdits moyens de contrôle comportent :
- des moyens de traitement pour fournir des signaux de modulation (MC1) de signaux de commande desdits bras (10, 12, 13), et **caractérisé en ce que** les moyens de contrôle comportent :
- des premiers moyens (51) de détermination de blocages possibles d'un bras (10, 12, 13) adaptés aux signaux de modulation (MC1),
- des premiers moyens (52) de sélection de blocages pour sélectionner des blocages parmi des blocages possibles, et lesdits blocages sélectionnés permettant de bloquer un bras dudit convertisseur et permettant une double commutation dans les autres bras, et
- des moyens (54) pour appliquer un des blocages sélectionnés aux signaux de modulation (MC1).

2. Dispositif de commande selon la revendication 1 **caractérisé en ce que** lesdits moyens de contrôle comportent des seconds moyens (53) de sélection de blocages adaptés à un équilibrage de tension intermédiaire (V0), la sélection de blocages permettant de bloquer un bras dudit convertisseur aussi en fonction de l'équilibrage de tension intermédiaire.

3. Dispositif de commande selon l'une des revendications 1 ou 2 **caractérisé en ce que** lesdits moyens de contrôle comportent :
- des moyens (60, 61) de fourniture de signaux de porteuses pour fournir au moins deux signaux (S1, S2) de porteuse à pentes inversées, et
- des moyens (63, 64) de modulation de signaux de porteuses recevant lesdits signaux de porteuses à pente inversée et des signaux de modulation (MDA, MDB, MDC) comportant une surmodulation de blocage d'un bras ou d'une sortie de puissance.

4. Dispositif de commande selon la revendication 3 **caractérisé en ce que** lesdits moyens de contrôle comportent des moyens (65) de sélection de signaux (S3, S4, S5, S6, S7, S8) de porteuses à appliquer à la commande de bras du convertisseur.

5. Dispositif de commande selon la revendication 4 **caractérisé en ce que** lesdits moyens (65) de sélection de signaux de porteuses sélectionnent les porteuses en fonction d'un sens de rotation (89, 90) dans un triangle élargi pointé par un vecteur (VR) dans un espace vectoriel de contrôle.

6. Dispositif de commande selon l'une des revendications 4 ou 5 **caractérisé en ce que** lesdits moyens (65) de sélection de signaux de porteuses sélectionnent les porteuses en fonction d'une commutation prioritaire de même type transistor-diode ou diode-transistor dans deux bras qui commutent simultanément.

7. Dispositif de commande selon la revendication 6 **caractérisé en ce que** lesdits moyens (65) de sélection de signaux de porteuses sélectionnent les porteuses en fonction d'une commutation prioritaire dans le sens diode transistor dans deux bras qui commutent simultanément.

8. Dispositif de commande selon l'une quelconque des revendications 4 à 7 **caractérisé en ce que** les signaux (S1, S2, S3, S4, S5, S6, S7, S8) de porteuses sont des signaux de forme en dent de scie comportant une première portion (80) à variation très rapide ou à échelon et une seconde portion (82) ayant une pente formant une rampe, le sens de double commutation complémentaire étant déterminé sur les portions à variation rapide.

9. Dispositif de commande selon l'une quelconque des revendications 1 à 8 **caractérisé en ce que,** pendant un cycle de régulation correspondant à un vecteur (VR) défini dans un espace vectoriel, la variation de sortie a au plus deux niveaux de tension.

10. Dispositif de commande selon l'une quelconque des revendications 1 à 9 **caractérisé en ce que,** pendant un cycle de régulation correspondant à un vecteur (VR) défini dans un espace vectoriel, la variation de sortie a au plus deux variations de niveau de tension.

11. Convertisseur électrique comportant :
- une alimentation continue comportant une première ligne (L1) de tension positive (V1), une seconde ligne (L2) de tension négative (V2), et une troisième ligne (L0) de tension intermédiaire (V0),
- des moyens (1) de conversion ayant au moins trois bras (10, 11, 12) de semi-conducteurs de puissance connectés entre lesdites lignes (L1, L2, L0) de tension positive, négative ou intermédiaire et des sorties pour fournir au moins une tension de sortie,
- un dispositif de commande comportant des moyens de contrôle (67) de la conduction des bras (10, 11, 12) de semi-conducteurs de puissance selon l'une des revendications 1 à 10, et
- des moyens (68) de mesure des courants disposés sur des lignes de conducteurs de sorties et connectés audit dispositif de commande pour fournir des signaux représentatifs de courants (Is) à des moyens de détermination de blocages pour bloquer une sortie de puissance ou d'un bras.

12. Procédé de commande d'un convertisseur d'énergie électrique comportant une alimentation continue avec une première ligne (L1) de tension positive (V1), une seconde ligne (L2) de tension négative (V2) et une troisième ligne (L0) de tension intermédiaire (V0), et comportant des moyens (1) de conversion ayant au moins trois bras (10, 11, 12) de semi-conducteurs de puissance connectés entre lesdites lignes (L1, L2, L0) de tension positive, négative ou intermédiaire et des sorties pour fournir au moins une tension de sortie, dans lequel le procédé comprend :
- une application de signaux de commande de la conduction des bras (10, 11, 12) de semi-conducteurs de puissance par des moyens de contrôle (67), ledit procédé étant
**caractérisé par** :
- une première détermination (103) de blocages permettant une double commutation parmi des blocages possibles,
- une première sélection (104) de blocages pour bloquer un bras dudit convertisseur en fonction des blocages permettant une double commutation, et
- une application d'un des blocages sélectionnés aux bras (10, 12, 13) de semi-conducteurs de puissance par les moyens de contrôle (67).

13. Procédé de commande selon la revendication 12 **caractérisé en ce qu'**il comporte, préalablement à l'application du blocage, une seconde sélection (105) de blocages adaptés à un équilibrage de tension intermédiaire, ladite sélection de blocages sélectionnant le bras à bloquer aussi en fonction de l'équilibrage de tension intermédiaire.

14. Procédé de commande selon l'une des revendications 12 ou 13 **caractérisé en ce qu'**il comporte :
- la fourniture (107) de signaux de porteuse pour fournir au moins deux signaux de porteuse à pentes inversées, et
- la modulation (107) desdits signaux de porteuses à pente inversée par des signaux de modulation comportant une surmodulation de blocage d'un bras ou d'une sortie de puissance.

15. Procédé de commande selon l'une quelconque des revendications 12 à 14 **caractérisé en ce qu'**il comporte la sélection (108) de signaux de porteuses à appliquer à la commande de bras du convertisseur.

16. Procédé de commande selon l'une quelconque des revendications 12 à 15 **caractérisé en ce qu'**il comporte la sélection de signaux de porteuses pour sélectionner des porteuses en fonction d'un sens de rotation (89, 90) dans un triangle élargi (85) pointé par un vecteur d'un espace vectoriel de contrôle.

17. Procédé de commande selon l'une quelconque des revendications 12 à 16 **caractérisé en ce qu'**il comporte la sélection (109) de signaux de porteuses pour sélectionner des porteuses en fonction d'une commutation prioritaire de même type transistor-diode ou diode-transistor dans deux bras qui commutent simultanément.

18. Procédé de commande selon l'une quelconque des revendications 12 à 17 **caractérisé en ce qu'**il comporte la fourniture (102) de signaux de porteuses de forme en dent de scie comportant une première portion (80) à variation très rapide ou à échelon et une seconde portion (82) ayant une pente formant une rampe, le sens de double commutation complémentaire étant déterminé sur les portions à variation rapide.

19. Procédé de commande selon l'une quelconque des revendications 12 à 18 **caractérisé en ce qu'**il comporte, pendant un cycle de régulation correspondant à un vecteur défini (VR) dans un espace vectoriel, une commande de bras de commutation provoquant une variation de sortie ayant au plus deux niveaux de tension ou au plus deux variations de niveau de tension.

## Claims

1. A control device of an electric power converter that comprises a DC power supply comprising a first line (L1) of positive voltage (V1), a second line (L2) of negative voltage (V2), and a third line (L0) of intermediate voltage (V0), and conversion means (1) having at least three power semi-conductor arms (10, 12, 13) connected between said lines (L1, L2, L0) of positive, negative or intermediate voltage and outputs to supply at least one output voltage,
said control device comprising control means (67) controlling turn-on of the power semi-conductor arms (10, 12, 13), wherein said control means comprise:
- processing means to supply modulation signals (MC1) of control signals of said arms (10, 12, 13), and **characterized in that** the control means comprise:
- first means (51) for determining possible turn-offs of an arm (10, 12, 13) tuned to the modulation signals (MC1),
- first turn-off selection means (52) to select turn-offs from the possible turn-offs, and said selected turn-offs enabling an arm of said converter to be turned-off and enabling double switching in the other arms, and
- means (54) for applying one of the selected turn-offs to the modulation signals (MC1).

2. The control device according to claim 1 **characterized in that** said control means comprise second turn-off selection means (53) tuned to balancing intermediate voltage (V0), selection of turn-offs enabling one arm of said converter to be turned-off also according to the intermediate voltage balancing.

3. The control device according to one of claims 1 or 2 **characterized in that** said control means comprise:
- means (60, 61) for supplying carrier signals to supply at least two carrier signals (S1, S2) with opposite slopes, and
- means (63, 64) for modulating carrier signals receiving said carrier signals with opposite slopes and modulation signals (MDA, MDB, MDC) comprising over-modulation of a power arm or output turn-off.

4. The control device according to claim 3 **characterized in that** said control means comprise means (65) for selecting carrier signals (S3, S4, S5, S6, S7, S8) to be applied to control of converter arms.

5. The control device according to claim 4 **characterized in that** said means (65) for selecting carrier signals select the carriers according to a direction of rotation (89, 90) in an enlarged triangle pointed by a vector (VR) in a control vector space.

6. The control device according to one of claims 4 or 5 **characterized in that** said means (65) for selecting carrier signals select the carriers according to a priority switching of the same transistor-diode or diode-transistor type in two arms which switch at the same time.

7. The control device according to claim 6 **characterized in that** said means (65) for selecting carrier signals select the carriers according to a priority switching in the diode-transistor direction in two arms which switch at the same time.

8. The control device according to any one of claims 4 to 7 **characterized in that** the carrier signals (S1, S2, S3, S4, S5, S6, S7, S8) are sawtooth-shaped signals comprising a first portion (80) with a very fast or stepped variation and a second portion (82) having a slope forming a ramp, the complementary double switching direction being determined on the fast variation portions.

9. The control device according to any one of claims 1 to 8 **characterized in that,** during a regulation cycle corresponding to a vector (VR) defined in a vector space, the output variation has at most two voltage levels.

10. The control device according to any one of claims 1 to 9 **characterized in that,** during a regulation cycle corresponding to a vector (VR) defined in a vector space, the output variation has at most two voltage level variations.

11. An electric converter comprising:
- a DC power supply comprising a first line (L1) of positive voltage (V1), a second line (L2) of negative voltage (V2), and a third line (L0) of intermediate voltage (V0),
- conversion means (1) having at least three power semi-conductor arms (10, 11, 12) connected between said lines (L1, L2, L0) of positive, negative or intermediate voltage and outputs to supply at least one output voltage,
- a control device comprising means (67) for controlling turn-on of power semi-conductor arms (10, 11, 12) according to one of claims 1 to 10, and
- current measuring means (68) arranged on output conductor lines and connected to said control device to supply signals representative of currents (Is) to means for determining turn-offs to turn a power or arm output off.

12. A control method of an electric power converter comprising a DC power supply with a first line (L1) of positive voltage (V1), a second line (L2) of negative voltage (V2), and a third line (L0) of intermediate voltage (V0), and comprising conversion means (1) having at least three power semi-conductor arms (10, 11, 12) connected between said lines (L1, L2, L0) of positive, negative or intermediate voltage and outputs to supply at least one output voltage, wherein the method comprises:
- application of turn-on control signals of the power semi-conductor arms (10, 11, 12) by control means (67), said method being **characterized by**:
- a first determination (103) of turn-offs enabling double switching from possible turn-offs,
- a first selection (104) of turn-offs to turn an arm of said converter off according to the turn-offs enabling double switching, and
- application of one of the selected turn-offs to the power semi-conductor arms (10, 11, 12) by the control means (67).

13. The control method according to claim 12 **characterized in that,** prior to application of the turn-off, it comprises a second selection (105) of turn-offs tuned to intermediate voltage balancing, said selection of turn-offs selecting the arm to be turned off also according to the intermediate voltage balancing.

14. The control method according to one of claims 12 or 13 **characterized in that** it comprises:
- supply (107) of carrier signals to supply at least two carrier signals with opposite slopes, and
- modulation (107) of said carrier signals with opposite slopes by modulation signals comprising over-modulation of a power arm or output turn-off.

15. The control method according to any one of claims 12 to 14 **characterized in that** it comprises selection (108) of carrier signals to be applied to control of converter arms.

16. The control method according to any one of claims 12 to 15 **characterized in that** it comprises selection of carrier signals to select carriers according to a direction of rotation (89, 90) in an enlarged triangle (85) pointed by a vector of a control vector space.

17. The control method according to any one of claims 12 to 16 **characterized in that** it comprises selection (109) of carrier signals to select carriers according to a priority switching of the same transistor-diode or diode-transistor type in two arms which switch at the same time.

18. The control method according to any one of claims 12 to 17 **characterized in that** it comprises supply (102) of sawtooth-shaped carrier signals comprising a first portion (80) with a very fast or stepped variation and a second portion (82) having a slope forming a ramp, the complementary double switching direction being determined on the fast variation portions.

19. The control method according to any one of claims 12 to 18 **characterized in that,** during a regulation cycle corresponding to a vector (VR) defined in a vector space, it comprises a switching arm command causing an output variation having at most two voltage levels or at most two voltage level variations.

## Patentansprüche

1. Steuerungseinrichtung zur Ansteuerung eines elektrischen Umrichters, die eine Gleichspannungsversorgung mit einer ersten Leitung (L1) mit positiver Spannung (V1), einer zweiten Leitung (L2) mit negativer Spannung (V2) und einer dritten Leitung (L0) mit einer Zwischenspannung (V0) sowie Umrichtmittel (1) umfasst, die mindestens drei Leistungshalbleiterzweige (10, 12, 13), welche zwischen die genannten Leitungen (L1, L2, L0) mit positiver Spannung, mit negativer Spannung und mit der Zwischenspannung sowie Ausgängen geschaltet sind, um mindestens eine Ausgangsspannung zu liefern, wobei die genannte Steuerungseinrichtung Steuermittel (67) zur Steuerung des Leitungszustands der Leistungshalbleiterzweige (10, 12, 13) umfasst, welche Steuermittel
- Verarbeitungsmittel zur Lieferung von Modulationssignalen (MC1) zur Modulation von Steuerungssignalen für die genannten Zweige (10, 12, 13) umfassen, **dadurch gekennzeichnet, dass** die Steuermittel
- erste Bestimmungsmittel (51) zur Bestimmung möglicher Sperrzustände eines Zweigs (10, 12, 13), die an die Modulationssignale (MC1) angepasst sind,
- erste Sperrauswahlmittel (52) zur Auswahl von Sperrzuständen aus den möglichen Sperrzuständen, wobei die genannten ausgewählten Sperrzustände das Sperren eines Zweig des genannten Umrichters sowie eine Zweifachumschaltung in den übrigen Zweigen erlauben, sowie
Mittel (54) zur Beaufschlagung der Modulationssignale (MC1) mit einem der ausgewählten Sperrzustände umfassen.

2. Steuerungseinrichtung nach Anspruch 1, **dadurch gekennzeichnet, dass** die genannten Steuermittel zweite Sperrauswahlmittel (53) umfassen, die an einen Abgleich der Zwischenspannung (V0) angepasst sind, wobei die Auswahl von Sperrzuständen das Sperren eines Zweigs des genannten Umrichters auch in Abhängigkeit vom Abgleich der Zwischenspannung erlaubt.

3. Steuerungseinrichtung nach einem der Ansprüche 1 oder 2, **dadurch gekennzeichnet, dass** die genannten Steuermittel
- Mittel (60, 61) zur Bereitstellung von Trägersignalen, um mindestens zwei Trägersignale (S1, S2) mit entgegengesetzter Steigung zu liefern, sowie
- Mittel (63, 64) zur Modulation von Trägersignalen umfassen, die mit den genannten Trägersignalen mit entgengesetzter Steigung sowie mit Modulationssignalen (MDA, MDB, MDC) beaufschlagt werden, die eine Übermodulation zum Sperren eines Zweigs oder Leistungsausgangs enthalten.

4. Steuerungseinrichtung nach Anspruch 3, **dadurch gekennzeichnet, dass** die genannten Steuermittel Auswahlmittel (65) zur Auswahl von Trägersignalen (S3, S4, S5, S6, S7, S8) umfassen, die zur Ansteuerung von Zweigen des Umrichters zu verwenden sind.

5. Steuerungseinrichtung nach Anspruch 4, **dadurch gekennzeichnet, dass** die genannten Trägersignal-Auswahlmittel (65) die Trägersignale in Abhängigkeit von einem Drehsinn (89, 90) in einem durch einen Vektor (VR) eines Steuerungs-Vektorraums bezeichneten, erweiterten Dreieck auswählen.

6. Steuerungseinrichtung nach einem der Ansprüche 4 oder 5, **dadurch gekennzeichnet, dass** die genannten Trägersignal-Auswahlmittel (65) die Trägersignale in Abhängigkeit von einem piroritären Schaltvorgang des gleichen Typs, Transistor-Diode oder Diode-Transistor, in zwei gleichzeitig schaltenden Zweigen auswählen.

7. Steuerungseinrichtung nach Anspruch 6, **dadurch gekennzeichnet, dass** die genannten Trägersignal-Auswahlmittel (65) die Trägersignale in Abhängigkeit von einem piroritären Schaltvorgang des Typs Diode-Transistor in zwei gleichzeitig schaltenden Zweigen auswählen.

8. Steuerungseinrichtung nach irgendeinem der Ansprüche 4 bis 7, **dadurch gekennzeichnet, dass** die Trägersignale (S1, S2, S3, S4, S5, S6, S7, S8) als sägezahnförmige Signale ausgebildet sind, die einen ersten Abschnitt (80) mit sehr schneller oder stufenförmiger Signaländerung sowie einen zweiten Abschnitt (82) mit einer Steigungsrampe aufweisen, wobei die Richtung der komplementären Zweifachumschaltung in den Abschnitten mit schneller Signaländerung bestimmt wird.

9. Steuerungseinrichtung nach irgendeinem der Ansprüche 1 bis 8, **dadurch gekennzeichnet, dass** innerhalb eines Regelzyklus' eines in einem Vektorraum definierten Vektors (VR) die Ausgangssignaländerung höchstens zwei Spannungsstufen umfasst.

10. Steuerungseinrichtung nach irgendeinem der Ansprüche 1 bis 9, **dadurch gekennzeichnet, dass** innerhalb eines Regelzyklus' eines in einem Vektorraum definierten Vektors (VR) die Ausgangssignaländerung höchstens zwei Spannungsstufenänderungen umfasst.

11. Elektrischer Umrichter, der
- eine Gleichspannungsversorgung mit einer ersten Leitung (L1) mit positiver Spannung (V1), einer zweiten Leitung (L2) mit negativer Spannung (V2) sowie einer dritten Leitung (L0) mit einer Zwischenspannung (V0),
- Umrichtmittel (1) mit mindestens drei Leistungshalbleiterzweigen (10, 12, 13), die zwischen die genannten Leitungen (L1, L2, L0) mit positiver Spannung, mit negativer Spannung und mit der Zwischenspannung geschaltet sind, um mindestens eine Ausgangsspannung zu liefern,
- eine Steuerungseinrichtung nach einem der Ansprüche 1 bis 10 mit Steuermitteln (67) zur Steuerung des Leitungszustands der Leistungshalbleiterzweige (10, 12, 13) sowie
- Strommessmittel (68) umfasst, die in Ausgangsleitungen angeordnet und mit der genannten Steuerungseinrichtung verbunden sind, um Ströme (Is) abbildende Signale an Mittel zur Sperrzustandsbestimmung zu liefern und so einen Leistungsausgang bzw. einen Zweig zu sperren.

12. Steuerungsverfahren zur Ansteuerung eines elektrischen Umrichters, das eine Gleichspannungsversorgung mit einer ersten Leitung (L1) mit positiver Spannung (V1), einer zweiten Leitung (L2) mit negativer Spannung (V2) und einer dritten Leitung (L0) mit einer Zwischenspannung (V0) sowie Umrichtmittel (1) mit mindestens drei Leistungshalbleiterzweigen (10, 12, 13) umfasst, welche Zweige zwischen die genannten Leitungen (L1, L2, L0) mit positiver Spannung, mit negativer Spannung und mit der Zwischenspannung sowie Ausgängen geschaltet sind, um mindestens eine Ausgangsspannung zu liefern, welches Verfahren
- eine Beaufschlagung mit Steuerungssignalen zur Steuerung des Leitungszustands der Leistungshalbleiterzweige mithilfe von Steuerungsmitteln (67) umfasst und **dadurch gekennzeichnet ist, dass** es
eine erste Bestimmung von Sperrzuständen (103), die eine Zweifachumschaltung unter den möglichen Sperrzuständen erlauben,
eine erste Auswahl (104) von Sperrzuständen zum Sperren eines Zweigs des genannten Umrichters in Abhängigkeit von den eine Zweifachumschaltung erlaubenden Sperrzuständen sowie
eine Beaufschlagung der Leistungshalbeiterzweige (10, 12, 14) mit einem der ausgewählten Sperrzustände durch die Steuermittel (67) umfasst.

13. Steuerungsverfahren nach Anspruch 12, **dadurch gekennzeichnet, dass** es vor der Beaufschlagung mit dem Sperrzustand eine zweite Auswahl von Sperrzuständen umfasst, die an einen Abgleich der Zwischenspannung angepasst ist, wobei die genannte Auswahl von Sperrzuständen den zu sperrenden Zweig auch in Abhängigkeit vom Abgleich der Zwischenspannung auswählt.

14. Steuerungsverfahren nach einem der Ansprüche 12 oder 13, **dadurch gekennzeichnet, dass** es
- die Bereitstellung (107) von Trägersignalen zur Lieferung von mindestens zwei Trägersignalen mit entgegengesetzter Steigung sowie
- die Modulation (107) der genannten Trägersignale mit entgegengesetzter Steigung durch Modulationssignale umfasst, die eine Übermodulierung zum Sperren eines Zweigs oder Leistungsausgangs enthalten.

15. Steuerungsverfahren nach irgendeinem der Ansprüche 12 bis 14, **dadurch gekennzeichnet, dass** es die Auswahl (108) von Trägersignalen umfasst, die zur Ansteuerung von Umrichterzweigen zu verwenden sind.

16. Steuerungsverfahren nach irgendeinem der Ansprüche 12 bis 15, **dadurch gekennzeichnet, dass** es die Auswahl von Trägersignalen umfasst, um Trägersignale in Abhängigkeit von einem Drehsinn (89, 90) in einem, von einem Vektor (VR) eines Steuerungs-Vektorraums bezeichneten, erweiterten Dreieck auszuwählen.

17. Steuerungsverfahren nach einem der Ansprüche 12 bis 16, **dadurch gekennzeichnet, dass** es die Auswahl (109) von Trägersignalen umfasst, um die Trägersignale in Abhängigkeit von einem piroritären Schaltvorgang des gleichen Typs, Transistor-Diode oder Diode-Transistor, in zwei gleichzeitig schaltenden Zweigen auszuwählen.

18. Steuerungsverfahren nach irgendeinem der Ansprüche 12 bis 17, **dadurch gekennzeichnet, dass** es die Lieferung (102) von sägezahnförmigen Trägersignalen umfasst, die einen ersten Abschnitt (80) mit sehr schneller oder stufenförmiger Signaländerung sowie einem zweiten Abschnitt (82) mit einer Steigungsrampe aufweisen, wobei die Richtung der komplementären Zweifachumschaltung in den Abschnitten mit schneller Signaländerung bestimmt wird.

19. Steuerungsverfahren nach irgendeinem der Ansprüche 12 bis 18, **dadurch gekennzeichnet, dass** es innerhalb eines Regelzyklus' eines in einem Vektorraum definierten Vektors (VR) eine Zweigumschaltsteuerung umfasst, die eine Ausgangssignaländerung mit höchstens zwei Spannungsstufen oder höchstens zwei Spannungsstufenänderungen bewirkt.
